# EUROPÄISCHE PATENTANMELDUNG

(11) **EP 0 654 210 A1**
(43) Veröffentlichungstag der Anmeldung: **24.05.1995**
(21) Anmeldenummer: 94117141.5
(22) Anmeldetag: 29.10.1994
(51) Int. Cl.: A01F 15/08

(54) **Antriebssystem für die Arbeitsorgane einer selbstfahrenden Quadergrossballenpresse**

(30) Priorität: 24.11.1993 DE 4340802
(71) Anmelder: FORTSCHRITT ERNTEMASCHINEN GmbH, D-01844 Neustadt (DE)
(72) Erfinder: Krombholz, Klaus, D-01844 Neustadt (DE); Berth, Dieter, D-01844 Neustadt (DE)
(74) Vertreter: Müller, Lutz

(57) **Zusammenfassung**

Die Erfindung betrifft ein Antriebssystem für die Arbeitsorgane einer selbstfahrenden Quadergroßballenpresse, die landwirtschaftliche Erntegüter zu quaderförmigen Großballen verpreßt. Dieses Antriebssystem soll einen minimalen Herstellungsaufwand erfordern, einen günstigen Wirkungsgrad besitzen und insbesondere eine gute Zugänglichkeit zu der Sicherheitseinrichtung der Schwungscheibe (22) im Havariefall gewährleisten. Das wird erreicht, wenn die Abtriebswelle (16) des Motors (14) quer zur Fahrtrichtung und gleichzeitig parallel zur Antriebswelle (17) des Hauptgetriebes (10), auf der wiederum die Schwungscheibe (22) gelagert ist, angeordnet ist, die antriebsmäßige Verbindung zwischen der Abtriebswelle (16) des Motors (14) und der Antriebswelle (17) des Hauptgetriebes (10) ist damit mittels eines einzigen Riementriebes (18) zu realisieren. Das Hauptgetriebe (10) besitzt nur noch Stirnradstufen (23), die eine schrittweise Reduzierung der Drehzahl von dessen Antriebswelle (17) bis zu seiner Ausgangswelle (11) bewirken.

## Beschreibung

Die Erfindung betrifft ein Antriebssystem für die Arbeitsorgane einer selbstfahrenden Quadergroßballenpresse nach dem Oberbegriff des Anspruches 1, die zum Ernten von landwirtschaftlichen Gütern, wie Stroh, Heu oder Welkgut, eingesetzt wird und die aus diesen Materialien nach dem Strangpreßverfahren quaderförmige Ballen mit einer Masse bis zu einer Tonne formt.
Eine derartige selbstfahrende Quadergroßballenpresse ist bisher nur in einer Ausführung bekannt geworden. Es handelt sich dabei um ein Erzeugnis der deutschen Firma DEUTZ-FAHR, das die Typbezeichnung "POWER PRESS 120" trägt und im Prospekt genannter Firma mit dem Druckvermerk LL-ED 08/93 der Öffentlichkeit vorgestellt wurde.
Diese selbstfahrende Quadergroßballenpresse vereinigt in sich das Fahrgestell, die Kabine und das Motoraggregat eines Mähdreschers, eine gezogene Quadergroßballenpresse nach DD 299 455 und eine speziell auf die Größe dieser Maschine ausgerichtete Pick up.
Aus dieser Kombination entstehen vor allem antriebstechnische Nachteile. Einmal wäre der relativ hohe Materialaufwand für die Antriebsteile zu nennen, da sich die Antriebsführung von einem quer zur Fahrtrichtung stehenden Motor zu einer in Fahrtrichtung zeigenden Antriebswelle für das Hauptgetriebe des Pressenteiles kompliziert gestaltet. Außerdem bedeutet eine Umlenkung des Antriebsstranges stets einen Wirkungsgradverlust und den Einsatz von in der Herstellung teuren Kegelradstufen.
Auch der Ort der Schwungscheibe ist in einer solchen Konzeption mehrfach nachteilig, denn einmal ist die Zugänglichkeit der in der Schwungscheibe angebrachten Sicherheitseinrichtungen im Havariefall für den Betreiber sehr schlecht und andererseits beansprucht sie gerade den Raum oberhalb des Förderschachtes zwischen Pick up und dem Zuführkanal des Pressenteiles, der sinnvoller für eine zweckmäßigere Fahrantriebsausführung genutzt werden könnte.

Der vorliegenden Erfindung liegt daher die Aufgabe zugrunde, ein Antriebssystem für die Arbeitsorgane einer selbstfahrenden Quadergroßballenpresse der eingangs näher definierten Bauart zu schaffen, das einen minimalen baulichen Aufwand zu seiner Herstellung erfordert, einen günstigen Wirkungsgrad aufweist und ausgehend von seiner räumlichen Aufteilung in der Maschinenkonzeption für die Gestaltung anderer Baugruppen von Vorteil ist. Außerdem soll im Havariefall die zugänglichkeit der Sicherheitseinrichtungen durch den Betreiber unkompliziert sein.

Diese Aufgabe wird durch den kennzeichnenden Teil des Patentanspruchs 1 gelöst, wobei in den Unteransprüchen Merkmale aufgeführt sind, die die Lösung in vorteilhafter Weise weiterentwickeln und auf die deshalb an dieser Stelle ausdrücklich verwiesen wird.
Durch die parallele Anordnung der quer zur Fahrtrichtung liegenden Abtriebswelle des Motors und der seitlich aus dem Hauptgetriebe herausgeführten Antriebswelle ist es möglich, beide Wellen mit einem Riementrieb antriebsmäßig direkt zu verbinden. Damit entfällt im Vergleich zum vorbekannten Stand der Technik ein Kegelradgetriebe und ein zweiter Riementrieb vom Kegelradgetriebe zur Antriebswelle des Hauptgetriebes ersatztlos und im Hauptgetriebe kann auch die erste Getriebestufe, die bisher stets eine Kegelradstufe war, durch eine Stirnradstufe ersetzt werden. Diese Maßnahmen reduzieren den Herstellungsaufwand für ein solches Antriebssystem erheblich und der Wirkungsgrad verbessert sich, da es nur noch einen Hülltrieb und ausschließlich Stirnradstufen gibt.
Ein weiterer Vorteil entsteht durch die Anordnung der Schwungscheibe unmittelbar nach der Antriebswelle des Motors, wodurch sie mit einer höheren Drehzahl als bisher angetrieben werden kann.

Da sie aber nur einen bestimmten Energiegehalt speichern muß, können somit ihre Masse und ihre Abmessungen verringert werden, was sich wiederum positiv beim Herstellungsaufwand bemerkbar macht.
Die neue Anordnung der Schwungscheibe macht außerdem den Raum vor dem Hauptgetriebe und über dem Förderschacht frei, wodurch sich die Möglichkeiten für eine verbesserte Ausführung des Fahrantriebes erweitern oder der Einsatz von weiteren funktionell bedeutsamen Einrichtungen an dieser Stelle möglich wird.
Es hat sich weiterhin als zweckmäßig erwiesen, die Riemenscheibe auf der Antriebswelle des Hauptgetriebes mit der Schwungscheibe zu kombinieren und dabei so anzuordnen, daß die Schwungscheibe von der Mitte der selbstfahrenden Quadergroßballenpresse aus gesehen weiter außen als die mit ihrer drehfest verbundene Riemenscheibe sitzt. Dadurch ist im Havariefall die Zugänglichkeit der Sicherheitseinrichtung der Schwungscheibe durch den Betreiber in vorteilhafter Weise gewährleistet.
Für die Gesamtkonzeption der selbstfahrenden Großballenpresse ist es von Vorteil, wenn der Riementrieb von der Abtriebswelle des Motors zur Antriebswelle des Hauptgetriebes in unmittelbarer Nähe neben einer Seitenwand des Preßkanals liegt, denn damit ist eine annähernd mittige Anordnung des Motoraggregates möglich und die Gesamtbreite der selbstfahrenden Quadergroßballenpresse bleibt innerhalb der zulässigen Grenzen.

Die Erfindung soll nachstehend an einem Ausführungsbeispiel naher erläutert werden. Die dazugehörigen Zeichnungen zeigen:
- Fig. 1:: eine schematische Seitenansicht einer selbstfahrenden Quadergroßballenpresse von rechts

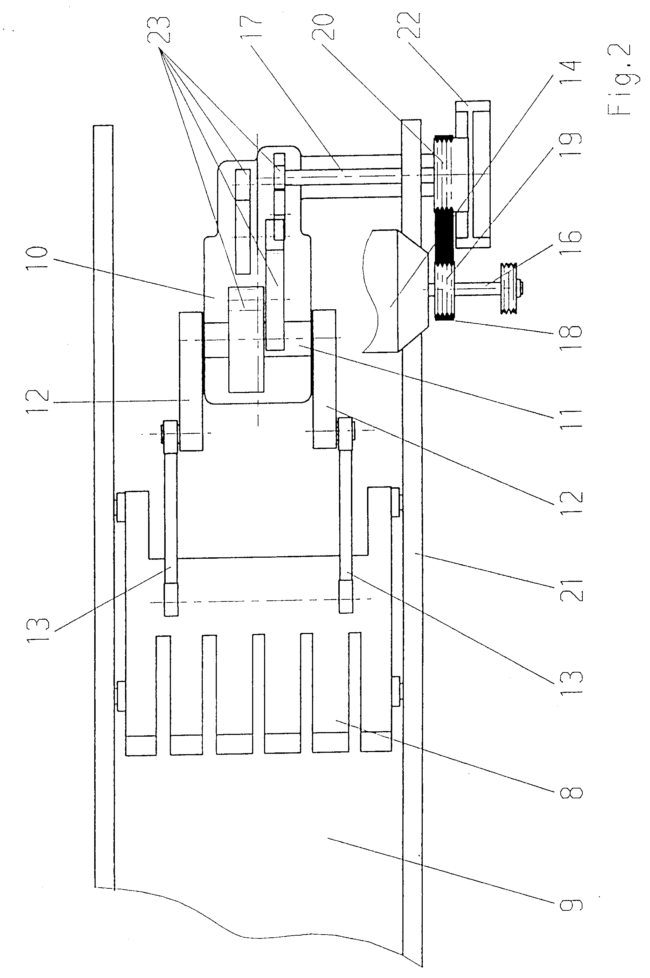

- Fig. 2:: eine schematische Draufsicht auf die Antriebsteile der Arbeitsorgane einer selbstfahrenden Quadergroßballenpresse mit geöffnetem Hauptgetriebe

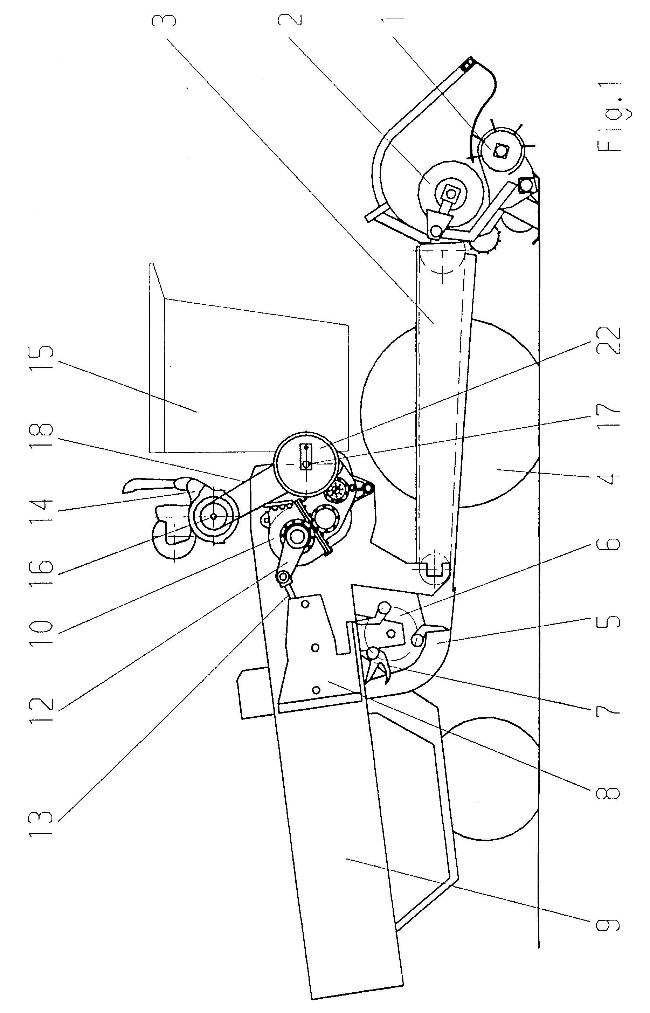

In Fig. 1 ist eine selbstfahrende Quadergroßballenpresse dargestellt, die an ihrer Vorderfront eine Pick up 1 mit einer sehr großen Arbeitsbreite aufweist und die somit in der Lage ist, zwei Mähdrescherschwade vom Feld aufzunehmen und mit ihrer Querförderschnecke 2 in der Breite zusammenzuführen.
Sie übergibt das Erntegut an den nachfolgenden Förderschacht 3, der zwischen den Vorderrädern 4 der selbstfahrenden Quadergroßballenpresse hindurchgeht und bis zur Einlaßöffnung des Zuführkanals 5 reicht. Ein oberhalb im Krümmungsbereich des Zuführkanals 5 angeordnetes Förderorgan 6 greift mit seinen Zinken 7 in diesen hinein, befüllt ihn und schiebt dann die gesamte Erntegutcharge in synchroner Abstimmung mit dem Preßkolben 8 in den Preßkanal 9. Der Preßkolben 8 verdichtet dann schichtweise das Erntegut im Preßkanal 9 nach dem bekannten Strangpreßververfahren zu einem hochverdichteten Ballen vorbestimmter Länge.
Am vorderen Ende des Preßkanals 9 ist ein Hauptgetriebe 10 befestigt, auf dessen Ausgangswelle 11 beidseitig Kurbelarme 12 angebracht sind. Die mit den Enden der Kurbelarme 12 drehgelenkig verbundenen Kolbenstangen 13 dienen zum Antrieb des Preßkolbens 8. Oberhalb des Hauptgetriebes 10 ist der Motor 14 der selbstfahrenden Quadergroßballenpresse montiert und davor befindet sich der Fahrerstand 15. Die Abtriebswelle 16 des Motors 14 und die Antriebswelle 17 des Hauptgetriebes 10 sind beide zueinander parallel und quer zur Fahrtrichtung gerichtet.
Diese Anordnung eröffnet die Möglichkeit einer antriebsmäßigen Direktverbindung zwischen der Abtriebswelle 16 und der Antriebswelle 17 mit einem Riementrieb 18, der außerdem noch durch eine nicht dargestellte Riemenkupplung zur Antriebsunterbrechung bzw. -verbindung genutzt werden kann. Dieser Riementrieb 18 ist bereits als Untersetzung ausgeführt, das heißt, der Durchmesser der Riemenscheibe 19 ist kleiner als der der Riemenscheibe 20. Die Lage des Riementriebs 18 ist dabei so gewählt, daß er unmittelbar neben der rechten Seitenwand 21 des Preßkanals 9 vorbeiführt.

Direkt an der Riemenscheibe 20 ist drehfest mit dieser verbunden die Schwungscheibe 22 so angeordnet, daß sie von der Seitenwand 21 aus gesehen weiter außen als die Riemenscheibe 20 sitzt, so daß der Betreiber zu den nicht dargestellten Sicherheitseinrichtungen der Schwungscheibe 22 im Havariefall eine sehr gute Zugänglichkeit vorfindet.
Die notwendige Reduzierung der Drehzahl von der Abtriebswelle 19 des Motors 14 auf die sehr niedrige Hubzahl des Preßkolben 8 ist durch die gezeigte Antriebsführung neben der bereits erwähnten Drehzahlverminderung durch den Riementrieb 18 ausschließlich über Stirnradstufen 23 zu erreichen. In dem hier beschriebenen Ausführungsbeispiel sind es fünf, da an der zweiten Stirnradstufe 23 der Antrieb für weitere Funktionsbaugruppen der selbstfahrenden Quadergroßballenpresse abgenommen wird.

## Patentansprüche

1. Antriebssystem für die Arbeitsorgane einer selbstfahrenden Quadergroßballenpresse
- mit einem annähernd horizontal angeordneten Preßkanal und einem darin hin- und herbeweglichen Preßkolben, der von einem am vorderen Ende des Preßkanals angeordneten Hauptgetriebe mittels eines Kurbeltriebes angetrieben wird;
- mit einem unterhalb des Preßkanals angeordneten Zuführkanal, der von einem Förderorgan gefüllt und anschließend in synchroner Abstimmung mit dem Preßkolben die im Zuführkanal angesammelte Erntegutcharge in den Preßkanal entleert;
- mit einem sich in Fahrtrichtung gesehen vom unteren Ende des Zuführkanals nach vorn erstreckenden Förderschacht, der das Erntegut von einer sich vor den Vorderrädern befindlichen Pick up übernimmt und zum Zuführkanal transportiert;
- mit einem oberhalb und im vorderen Bereich des Preßkanals angeordneten Fahrerstand, hinter dem sich wiederum ein Motor mit quer zur Fahrtrichtung zeigender Abtriebswelle befindet und von der aus die Antriebswelle des Hauptgetriebes angetrieben wird, auf der eine Schwungscheibe befestigt ist,
**dadurch gekennzeichnet, daß**
- die Antriebswelle (17) des Hauptgetriebes (10) parallel zur Abtriebswelle (16) des Motors (14) gerichtet ist;
- auf der Antriebswelle (17) die Schwungscheibe (22) befestigt ist;
- die Abtriebswelle (16) des Motors (14) und die Antriebswelle (17) des Hauptgetriebes (10) antriebsmäßig direkt, d. h. mit einem einzigen Antriebsübertragungsmittel, untereinander in Wirkverbindung stehen;
- das Hauptgetriebe (10) von der Antriebswelle (17) bis zu seiner Ausgangswelle (11) zum Antrieb der Kurbelarme (12) für den Preßkolben (8) nur noch Stirnradstufen (23) aufweist.

2. Antriebssystem nach Anspruch 1, dadurch gekennzeichnet, daß das Antriebsübertragungsmittel zwischen der Abtriebswelle (16) des Motors (14) und der Antriebswelle (17) des Hauptgetriebes (10) ein Hülltrieb ist, der vorzugsweise als Riementrieb (18) ausgeführt ist.

3. Antriebssystem nach den Ansprüchen 1 und 2, dadurch gekennzeichnet, daß die Riemenscheibe (20) auf der Antriebswelle (17) des Hauptgetriebes (10) mit der Schwungscheibe (22) drehfest verbunden ist.

4. Antriebssystem nach Anspruch 3, dadurch gekennzeicnet, daß von der Mitte der selbstfahrenden Quadergroßballenpresse ausgehend die Schwungscheibe (22) weiter außen als die Riemenscheibe (20) auf der Antriebswelle (17) sitzt.

5. Antriebssystem nach den Ansprüchen 1 bis 4, dadurch gekennzeichnet, daß sich der Riementrieb (18) zum Antrieb der Antriebswelle (17) des Hauptgetriebes (10) außerhalb der Seitenwand (21) des Preßkanals (9) befindet.

6. Antriebssystem nach den Ansprüchen 1 bis 5, dadurch gekennzeichnet, daß der Riementrieb (18) eine solche Übersetzung aufweist, daß die Antriebswelle (17) des Hauptgetriebes (10) langsamer als die Abtriebswelle (16) des Motors (14) läuft.

7. Antriebssystem nach den Ansprüchen 1 bis 6, dadurch gekennzeichnet, daß die Stirnradstufen (23) des Hauptgetriebes (10) von der Antriebswelle (17) bis zu seiner Ausgangswelle (11) eine schrittweise Reduzierung der Drehzahl bewirken.
